# EUROPÄISCHE PATENTSCHRIFT

(11) **EP 1 527 669 B1**
(45) Veröffentlichungstag und Bekanntmachung des Hinweises auf die Patenterteilung: **13.12.2006**
(21) Anmeldenummer: 04014572.4
(22) Anmeldetag: 22.06.2004
(51) Int. Cl.: A01D 34/66

(54) **Hebekinematik**
Lifting kinematics
Cinématique de relevage

(30) Priorität: 30.10.2003 DE 20316727 U
(43) Veröffentlichungstag der Anmeldung: 04.05.2005
(73) Patentinhaber: Fella-Werke GmbH & Co. KG, 90537 Feucht bei Nürnberg (DE)
(72) Erfinder: Kohl, Bernhard, 90537 Feucht (DE); Sticotti, Mark, 71737 Kirchberg/Murr (DE); Pürrer, Josef, 90537 Feucht (DE)
(74) Vertreter: Grünecker, Kinkeldey, Stockmair & Schwanhäusser Anwaltssozietät

(56) Entgegenhaltungen:
- DE-A- 10 011 730
- DE-A- 19 534 695
- US-A- 5 101 616
- US-A- 5 934 050

## Beschreibung

Die Erfindung betrifft eine Mähmaschine der im Oberbegriff des Anspruchs 1 angegebenen Art.

Bei der aus DE10011730 C bekannten Mähmaschine sind die beiden, wirkungsmäßig zwischen dem Tragrahmen und dem Hubarm eingeordneten Hydrozylinder koaxial angeordnet und entweder mit ihren aneinanderliegenden Zylinderböden oder über die zueinanderweisenden Kolbenstangen miteinander verbunden. Beide Hydrozylinder sind einseitig beaufschlagbare Zugzylinder, in denen die drucklosen Kolbenseiten zur Atmosphäre entlastet sind. Der Hubweg des kürzeren Hydrozylindrs wird zum Einstellen der Vorgewendestellung benutzt. Der längere Hubweg des anderen Hydrozylinders wird zum Einstellen der in etwa vertikalen Transportstellung eingesetzt, gegebenenfalls in Kombination mit dem Hub auch des kurzen Hydrozylinders. Zur teilweisen Gewichtsentlastung des Mähwerks sind entweder Entlastungsfedern oder eine hydraulische Vorspannung mit einem Schließventil und einem Druckspeicher für den kurzen Hydrozylinder vorgesehen. Da in den Arbeitsstellungen zwischen den Anlenkpunkten der beiden Hydrozylinder am Tragrahmen und am Hubarm ein Abstand vorliegt, der nahezu der Arbeitsbreite des Mähwerks entspricht, werden die Kolben durch das relativ hohe Gewicht der Hydrozylinderanordnung unter den ständigen, durch Bodenunebenheiten verursachten Bewegungen beim Arbeiten seitlich belastet, woraus zu Undichtigkeiten führender Verschleiß resultiert. Speziell der Abdichtbereich an der Innenwand der Zylinderrohre ist bei ständigen Bewegungen verschleißgefährdet. Durch die zur Atmosphäre entlasteten Zylinderkammern der nur in Zugrichtung beaufschlagten Hydrozylinder sind die Gleitflächen durch Korrosion aufgrund Feuchtigkeit und/oder Verschmutzung gefährdet. Da nur ein einziges Schwenksystem vorgesehen ist, in welchem die beiden Hydrozylinder entweder gemeinsam oder jeweils einzeln arbeiten, wird einerseits der große Abstand der Hydrozylinder am hubarm und am Tragrahmen benötigt, und ergeben sich zwischen einer tiefen Arbeitsstellung und der Vorgewendestellung des Mähwerks relativ ungünstige Hebelarme für die Hydrozylinder.

Weiterer Stand der Technik ist enthalten in US 5 934 050 A, DE 195 34 695 A und US 5 101 616 A.

Der Erfindung liegt die Aufgabe zugrunde, eine Mähmaschine der eingangs genannten Art, das heißt ein Heckanbaumähwerk, zu schaffen, dass sich durch eine funktionssichere hydromechanische Schwenkvorrichtung auszeichnet.

Die gestellte Aufgabe wird mit den Merkmalen des Anspruchs 1 gelöst.

In dem der Zwischenhebel die hydromechanische Schwenkvorrichtung in zwei Schwenksysteme unterteilt, deren jedes durch nur einen der Hydrozylinder betätigt wird, wird ein kürzerer Abstand zwischen den Anlenkstellen am Tragrahmen und am Hubarm ermöglicht, so dass die Gewichtsbelastungen und die verschleißträchtigen Querkräfte der Kolben der Hydrozylinder reduziert sind. Ferner lässt sich jeder Hydrozylinder beidendig für sich alleine abstützen. Zumindest der zweite Hydrozylinder lässt sich so auslegen, dass er keiner Korrosion von außen unterliegt.

Zweckmäßig umfasst das eine Schwenksystem den für die Transportstellung verantwortlichen ersten Hydrozylinder, den Tragarm und den Zwischenhebel, während das andere Schwenksystem den zweiten Hydrozylinder, den Hubarm und den Zwischenhebel umfasst. Der zweite Hydrozylinder ist für die Einstellung für die Arbeitsstellung (hoch, mittel oder niedrig) und der Vorgewendestellung verantwortlich.

Günstig ist es, den ersten Hydrozylinder zumindest einseitig zu beaufschlagen, und zwar in Zugrichtung aus einer den Arbeits- und der Vorgewendestellung zugeordneten Anschlagposition, in der der Kolben des ersten Hydrozylinders sicher gegen Querkräfte abgestützt ist.

Der zweite Hydrozylinder wird einseitig und in Druckrichtung hydraulisch beaufschlagt und so ausgebildet, dass er einen ausreichend großen Schwenkwinkel gewährleistet, wie er zur Bodenanpassung des Mähwerks in den Arbeitsstellungen und zum Einstellen der Vorgewendestellung benötigt wird. Der erste Hydrozylinder erzeugt hierbei Zugkräfte, während der zweite Hydrozylinder Druckkräfte erzeugt. Jeder Hydrozylinder ist z.B. für sich hydraulisch betätigbar.

Um ausgewogene Kraftübertragungsverhältnisse zu erzielen, ist es günstig, zwei parallele zweite Hydrozylinder vorzusehen, deren jeder klein baut und leicht sein kann.

Besonders zweckmäßig ist dieser zweite Hydrozylinder ein Plungerzylinder, dessen Plunger zuverlässig abgedichtet und großflächig geführt wird, so dass Querkräfte keinen verschleißfördernden Einfluss gewinnen.

Montagetechnisch günstig teilt sich der Zwischenhebel die Zwischenachse mit dem Hubarm.

Um für beide Schwenksysteme günstige Hebelverhältnisse zu erhalten, ist es zweckmäßig den Hubarm und den Zwischenhebel gleichsinnig L- förmig abzukröpfen.

In Verbindung damit bietet es sich an, den Zwischenhebel mit einem L- Schenkel an der Schwenkachse zu lagern, den zweiten Hydrozylinder beim freien Ende des anderen L- Schenkels anzulenken, den ersten Hydrozylinder am Zwischenhebel zwischen der L- Beuge und der Anlenkung des zweiten Hydrozylinders anzulenken, und schließlich den zweiten Hydrozylinder kolbenstangenseitig im Bereich der L- Beuge des Hubarms am Hubarm anzulenken.

Zweckmäßig überlappen die ersten und zweiten Hydrozylinder einander zumindest in den Arbeitsstellungen des Mähwerks. Dadurch lässt sich der Abstand zwischen den Anlenkstellen am Tragrahmen und am Hubarm optimal kurz wählen.

Um eine Transportstellung einstellen zu können, in der das Mähwerk aus der Arbeitsstellung über die vertikale Orientierung hinaus eingeschwenkt ist, ist es zweckmäßig, das eine Schwenksystem so auszubilden, dass das Mähwerk entsprechend weit eingeschwenkt werden kann, wobei der erste Hydrozylinder doppelseitig beaufschlagbar sein sollte, um das Mähwerk aus der Transportstellung über den Totpunkt hinweg zurückzustellen. Der doppelseitig beaufschlagbare erste Hydrozylinder ist ferner resistent gegen innere Korrosion aufgrund Umwelt- und Atmosphäreneinflüssen, weil er keine belüftete Zylinderkammer aufweist.

Zur Gewichtsentlastung des Mähwerks in den Arbeitsstellungen sind zweckmäßig in einer Drucksteuerung des zweiten Hydrozylinders ein druckabhängiges Schließventil und ein Druckspeicher vorgesehen. Alternativ oder additiv könnten Gewichtsentlastungsfedern entweder zwischen dem Zwischenhebel und dem Hubarm oder zwischen dem Tragrahmen und dem Hubarm vorgesehen werden.

Eine kompakte Bauweise lässt sich erzielen, wenn der Zwischenhebel mit den zwei zweiten Hydrozylindern innerhalb des Hubarms angeordnet wird.

Günstige Kraftübertragungsverhältnisse ergeben sich mit einem doppelwandigem Zwischenhebel, der einen Zwischenraum für die Kolbenstange des ersten Hydrozylinders und für dessen Anlenkstelle aufweist.

Anhand der Zeichnung wird eine Ausführungsform des Erfindungsgegenstandes erläutert. Es zeigen:
- Fig.1: eine Hinteransicht einer an das Heck eines Schleppers angebauten Mähmaschine, zum Teil im Schnitt, mit in einer mittleren Arbeitsstellung befindlichen Mähwerk,
- Fig.2: die Mähmaschine in einer Vorgewendestellung des Mähwerks, in einer Ansicht von hinten links oben, und
- Fig.3: eine Hinteransicht der Mähmaschine in einer Transportstellung.

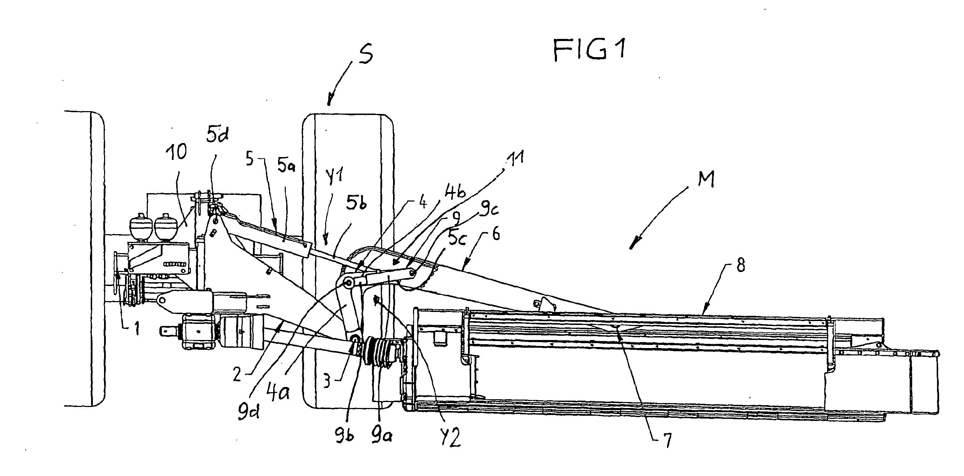

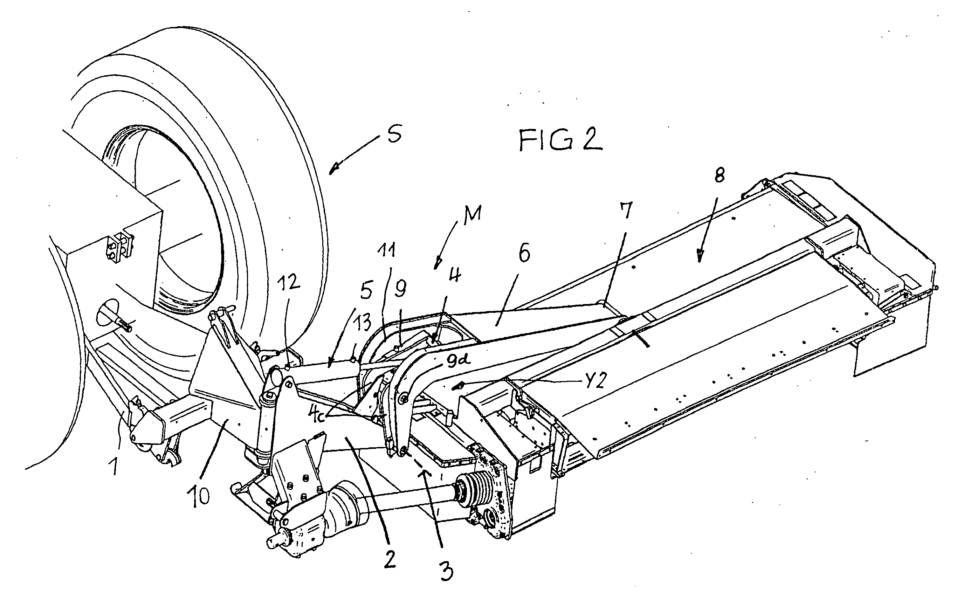

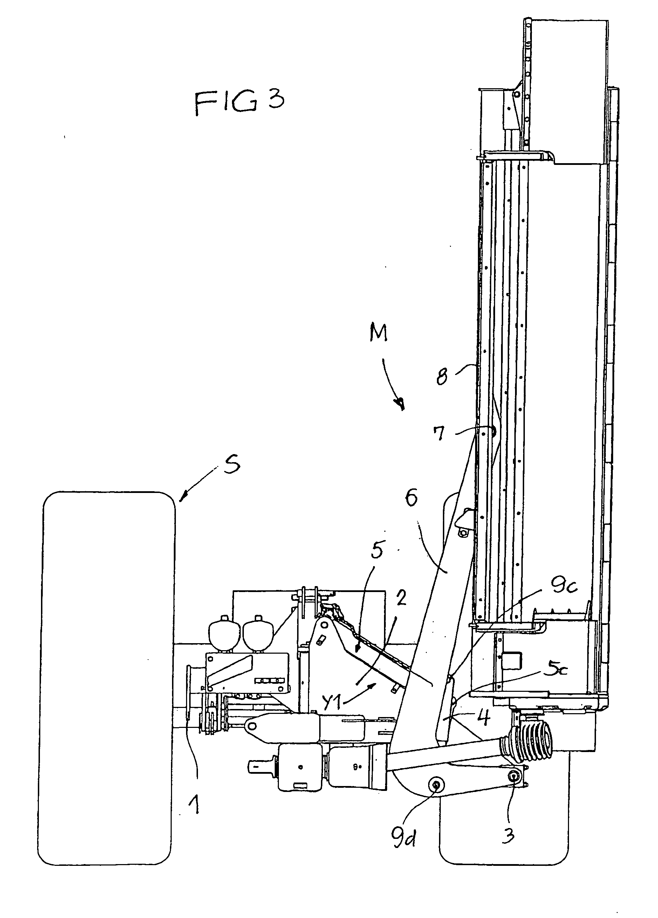

Eine in den Fig.1 bis 3 gezeigte Mähmaschine M ist an die Hubeinrichtung 1 (z.B. Dreipunkt-Hubeinrichtung) eines Schleppers S abnehmbar angebaut) (Heckanbaumähwerk). Ein Tragrahmen 10 weist einen seitlich schräg nach unten abstehenden Tragarm 2 auf, an dessen Ende ein Hubarm 6 um eine in Fahrtrichtung orientierte Schwenkachse 3 schwenkbar angeschlossen ist. Der Hubarm 6 ist über eine Gelenkstelle 7 mit einem Mähwerk 8 verbunden, das in Fig.1 in einer mittleren Arbeitsstellung, in Fig.2 in einer sogenannten Vorgewendestellung und in Fig.3 in einer Transportstellung gezeigt ist. Das Mähwerk 8 kann beim Arbeiten auch höhere und niedrigere und um das Gelenk 7 verschwenkte Arbeitsstellungen einnehmen, als gezeigt.

Am Schlepperheck angebaute Mähwerke müssen für den Wendevorgang am Feldende soweit ausgehoben werden, dass auch in sehr unebenem Gelände ausreichende Bodenfreiheit erreicht wird und sich das Mähwerk über bereits gemähtes Emtegut hinwegführen lässt, ohne mit diesem in Berührung zu kommen (Vorgewendestellung gemäß Fig.2). Für die Transportfahrt (Fig.3)auf öffentlichen Straßen und engen Feldwegen wird das Mähwerk um cirka 90 Grad nach oben geschwenkt, damit die Gesamtbreite des aus Schlepper und Mähwerk bestehenden Gespannes die für den Straßenverkehr zulässige Gesamtbreite nicht überschreitet.

Für die Verstellung des Mähwerks 8 ist eine hydromechanische Schwenkvorrichtung mit ersten und zweiten Hydrozylindern 5,9 und einem L- förmigen Zwischenhebel 4 vorgesehen. Der Zwischenhebel 4 ist am Tragarm schwenkbar gelagert und teilt sich bei der gezeigten Ausführungsform die Schwenkachse 3 mit dem Hubarm 6. Der Zwischenhebel ist mit dem einen L- Schenkel (4a) (Fig.1) an der Schwenkachse 3 angelenkt. Der L- Schenkel 4a erstreckt sich in der Arbeitsstellung des Mähwerks 8 nach oben, während der andere L- Schenkel 4b nach außen weist. Der Zwischenhebel 4 und der Hubarm 6 sind z. B. L- förmig gekröpft. Der erste Hydrozylinder 5 hat eine zylinderseitige Anlenkstelle 5d am Tragrahmen 10 beziehungsweise an einer oben liegenden Stelle des Tragarms 2, sodass sich in der Arbeitsstellung in Fig.1 der Hydrozylinder 5a schräg nach außen unten erstreckt. Die Kolbenstange 5b ist am Zwischenhebel 4 an dessen oberem L- Schenkel 4b zwischen dem Ende des L- Schenkels 4b und der Beuge in einer Anlenkstelle 5c angelenkt. Der zweite Hydrozylinder 9, vorzugsweise ein Plungerzylinder, der nur als Druckzylinder arbeitet, ist mit seinem zylinderseitigen Ende in einer Anlenkstelle 9c am Ende des oberen L- Schenkels 4b angelenkt, sodass sich sein Zylinder 9a in Richtung zum Schlepper S erstreckt. Der Plunger 9b ist in einer Anlenkstelle 9d des Hubarms 6 angelenkt, und zwar im Bereich der Beuge des gekröpften Hubarms 6. In der Arbeitsstellung in Fig.1 überlappen sich die beiden Hydrozylinder 5,9. Zweckmäßig sind zwei parallele, nebeneinanderliegende zweite Hydrozylinder 9 vorgesehen.

Wie Fig.2 zeigt, kann der Hubarm 6 einen Ausschnitt 11 im Bereich der Beuge aufweisen, in welchem der Zwischenhebel 4 innen im Hubarm 6 angeordnet ist. Der Zwischenhebel ist zweckmäßig doppelwandig (Wände 4c) mit einem Zwischenraum zum Eingriff der Kolbenstange 5b und zum Anordnen der Anlenkstelle 5c ausgebildet. Die beiden zweiten Hydrozylinder 9 sind an beiden Seiten des Zwischenhebels angeordnet.

Der Zwischenhebel 4 unterteilt die hydromechanische Schwenkvorrichtung in zwei getrennte Schwenksysteme Y1 und Y2. Das eine Schwenksystem Y1 umfasst den Hydrozylinder 5, den Tragarm 2 und den Zwischenhebel 4. Das andere Schwenksystem Y2 umfasst den Zwischenhebel 4, den Hubarm 6 und den Hydrozylinder 9.

Der Hydrozylinder 5 ist zum Erzeugen einer Zugkraft zumindest einseitig beaufschlagbar, zweckmäßigerweise aber über Anschlüsse 12,13 in Fig.2 sogar doppelseitig beaufschlagbar, um eine Transportstellung einstellen zu können, in der das Mähwerk 8 über die vertikale Orientierung der Fig.3 hinaus weiter nach innen zur Schleppermitte geschwenkt ist, und um das Mähwerk aus dieser Übertotpunktlage wieder zurückschwenken zu können.

Der Hydrozylinder 9 ist einseitig in Druckrichtung beaufschlagbar. In der Drucksteuerung des zweiten Hydrozylinders 9 ist zweckmäßigerweise ein druckabhängiges Schließventil in Zusammenwirkung mit einem Druckspeicher vorgesehen, um in den Arbeitsstellungen eine vorbestimmte Druckkraft zu erzeugen, die eine Gewichtsentlastung bewirkt. Diese Komponenten sind in den Figuren nicht dargestellt.

In der in Fig.1 gezeigten Arbeitsstellung, und auch in höheren und tieferen Arbeitssteilungen des Mähwerks 8, ist die Kolbenstange 5b des Hydrozylinders 5 auf Anschlag ausgezogen, um den Zwischenhebel 4 in der gezeigten Schwenkposition abzustützen. Der Hydrozylinder 9 ist entweder nicht beaufschlagt und ermöglicht die Arbeitsbewegungen zwischen den verschiedenen Arbeitsstellungen des Mähwerks 8, ohne auf Anschlag zu kommen, oder wird hydraulisch mit einer Grundvorspannung beaufschlagt, die der Gewichtsentlastung dient.

Um die Vorgewendestellung von Fig.2 einzustellen, wird der Hydrozylinder 9 druckbeaufschlagt, beispielsweise bis zu einer Anschlagstellung, um den Hubarm 6 in die in Fig.2 gezeigte Schwenkstellung um die Schwenkachse 3 zu bringen und zu halten. Der Hydrozylinder 5 braucht dabei nicht beaufschlagt zu werden. Um erneut die Arbeitsstellung (Schwimmstellung) einzustellen, wird die Beaufschlagung des Hydrozylinders 9 abgebaut, gegebenenfalls nur bis auf die Vorspannung zur Gewichtsentlastung.

Um die Transportstellung, beispielsweise der Fig.3, einzustellen, wird der Hydrozylinder 5 beaufschlagt, um die Kolbenstange 5b einzuziehen und den Zwischenhebel 4 in Fig.1 bis in die in Fig.3 gezeigte Schwenklage gegen den Uhrzeigersinn zu verschwenken. Der Hydrozylinder 9 drückt den Hubarm 6 über die Anlenkstelle 9d entgegen dem Urzeigersinn um die Schwenkachse 3 hoch. Gegebenenfalls wird der Hydrozylinder 9 für die Transportstellung ebenfalls beaufschlagt. Dies ist aber nicht unbedingt erforderlich. Zum erneuten Absenken des Mähwerks 8 wird der Hydrozylinder 5 wieder entlastet, oder gegebenenfalls sogar in Druckrichtung beaufschlagt.

Bei einer alternativen, nicht gezeigten Ausführungsform könnten beiderseits des geschlossen ausgebildeten Hubarmes 6 Zwischenhebel 4 jeweils mit einem zweiten Hydrozylinder 9 vorgesehen sein. Bei kleinen Mähmaschinen würde ein Zwischenhebel mit einem zweiten Hydrozylinder 9 ausreichen. Der Zwischenhebel 4 könnte auch als in etwa dreieckige Blechkonstruktion ausgebildet sein. Der erste Hydrozylinder 5 könnte auch in umgekehrter Einbaulage installiert sein.

## Patentansprüche

1. Mähmaschine (M) zum Anbau an eine Schlepper-Hubeinrichtung (1), mit einem seitlich auskragenden Mähwerk (8), das über einen Hubarm (6) um eine in etwa in Fahrtrichtung orientierte Schwenkachse (3) schwenkbar an einem Tragarm (2) eines Tragrahmens (10) angeordnet ist, und mit einer hydromechanischen Schwenkvorrichtung zum Verstellen des Mähwerks zwischen in etwa horizontalen Arbeitsstellungen, einer etwas angehobenen Vorgewendestellung und einer zumindest annähernd senkrechten Transportstellung, wobei die Schwenkvorrichtung zumindest zwei wirkungsmäßig zwischen dem Tragrahmen (10) und dem Hubarm (6) eingeordnete Hydrozylinder (5,9) aufweist, **dadurch gekennzeichnet, dass** zwischen den beiden Hydrozylindern (5,9) ein am Tragrahmen (10) oder Tragarm (2) schwenkbarer Zwischenhebel (4) eingeordnet ist, der die Schwenkvorrichtung in zwei getrennte Schwenksysteme (Y1,Y2) unterteilt.

2. Mähmaschine nach Anspruch 1, **dadurch gekennzeichnet, dass** das eine Schwenksystem (Y1) den zur Verstellung in die Transportstellung vorgesehenen ersten Hydrozylinder (5), den Tragarm (2) und den Zwischenhebel (4) und das andere Schwenksystem (Y2) den zumindest einen für die Arbeitseinstellungen und die Vorgewendestellung vorgesehenen zweiten Hydrozylinder (5), den Hubarm (6) und den Zwischenhebel (4) umfasst.

3. Mähmaschine nach Anspruch 1, **dadurch gekennzeichnet, dass** der erste Hydrozylinder (5) zumindest einseitig in Zugrichtung aus einer den Arbeits- und Vorgewendestellungen zugeordneten Anschlagposition beaufschlagbar ist, und das der zweite Hydrozylinder (5) einseitig in Druckrichtungen beaufschlagbar und so ausgebildet ist, dass er einen für eine Bodenanpassung des Mähwerks (8) in den Arbeitsstellungen und für die Vorgewendestellung erforderlichen Schwenkwinkel des anderen Schwenksystems (Y2) zulässt.

4. Mähmaschine nach Anspruch 1, **dadurch gekennzeichnet, dass** zwei parallele zweite Hydrozylinder (5) vorgesehen sind.

5. Mähmaschine nach Anspruch 1, **dadurch gekennzeichnet, dass** jeder zweite Hydrozylinder (5) ein Plungerzylinder ist.

6. Mähmaschine nach Anspruch 1, **dadurch gekennzeichnet, dass** sich der Zwischenhebel (4) und der Hubarm (6) die Schwenkachse (3) am Tragarm (2) teilen.

7. Mähmaschine nach Anspruch 1, **dadurch gekennzeichnet, dass** der Hubarm (6) und der Zwischenhebel (4) gleichsinnig L- förmig gekröpft sind.

8. Mähmaschine nach Anspruch 7, **dadurch gekennzeichnet, dass** der Zwischenhebel (4) beim Ende eines L- Schenkels (4a) an der Schwenkachse (3) angelenkt ist, dass der zweite Hydrozylinder (5) beim Ende des anderen L- Schenkels (4b) angelenkt ist, dass der erste Hydrozylinder (5) am Zwischenhebel (4) zwischen der L-Beuge und der Anlenkung (9c) des zweiten Hydrozylinders und der zweite Hydrozylinder (5) kolbenstangenseitig im Bereich der L- Beuge des Hubarms (6) am Hubarm (6) angelenkt sind.

9. Mähmaschine nach wenigstens einem der vorhergehenden Ansprüche, **dadurch gekennzeichnet, dass** zumindest in den Arbeitsstellungen die ersten und zweiten Hydrozylinder (5,9) einander überlappen.

10. Mähmaschine nach Anspruch 1, **dadurch** gekennezichnet, dass das eine Schwenksystem (Y1) so ausgebildet ist, dass das Mähwerk (8) über eine annähernd vertikale Orientierung hinaus in die Transportstellung schwenkbar ist, und dass der erste Hydrozylinder (5) doppelseitig beaufschlagbar ist.

11. Mähmaschine nach wenigstens einem der vorherigen Ansprüche, **dadurch gekennzeichnet, dass** in einer Drucksteuerung des zweiten Hydrozylinders (9) ein druckabhängiges Schließventil und ein Druckspeicher vorgesehen sind.

12. Mähmaschine nach Anspruch 1, **dadurch gekennzeichnet, dass** der Zwischenhebel (4) mit zwei zweiten Hydrozylindern (9) innerhalb des Hubarms (6) angeordnet ist.

13. Mähmaschine nach wenigstens einem der vorhergehenden Ansprüche, **dadurch gekennzeichnet, dass** der Zwischenhebel (4) mit einem Zwischenraum für die Kolbenstange (5b) und die Anlenkung (5c) des ersten Hydrozylinders (5) doppelwandig (4c) ausgebildet ist.

## Claims

1. Mowing machine (M) for attaching to a tractor-lifting mechanism (1), with a laterally projecting mowing unit (8) disposed on a bearing arm (2) of a support frame (10) so as to be pivotable by means of a lifting arm (6) about a pivot axis (3) oriented more or less in the direction of travel, and having a hydraulic-mechanical pivot device for displacing the mowing unit between a slightly raised pre-usage position in more or less horizontal working positions and an at least almost vertical transport position, which pivot device has at least two hydraulic cylinders (5, 9) disposed between the support frame (10) and the lifting arm (6) for operating purposes, **characterised in that** a pivotable intermediate lever (4) is provided on the support frame (10) or bearing arm (2) between the two hydraulic cylinders (5, 9), which sub-divides the pivoting device into two separate pivot systems (Y1, Y2).

2. Mowing machine as claimed in claim 1, **characterised in that** one pivot system (Y1) comprises the first hydraulic cylinder (5) provided for displacement into the transport position, the bearing arm (2) and the intermediate lever (4), and the other pivot system (Y2) comprises the at least one second hydraulic cylinder (5) provided for the working position adjustments and the pre-usage position, the lifting arm (6) and the intermediate lever (4).

3. Mowing machine as claimed in claim 1, **characterised in that** the first hydraulic cylinder (5) can be pressurised from at least one end in the pulling direction out of a stop position associated with the working and pre-usage positions, and the second hydraulic cylinder (5) can be pressurised from one end in pressure directions and is designed so that it enables the mowing unit (8) to be adapted to the ground in the working positions and allows the pivot angle of the other pivot system (Y2) needed to assume the pre-usage position.

4. Mowing machine as claimed in claim 1, **characterised in that** two parallel second hydraulic cylinders (5) are provided.

5. Mowing machine as claimed in claim 1, **characterised in that** every second hydraulic cylinder (5) is a plunger cylinder.

6. Mowing machine as claimed in claim 1, **characterised in that** the intermediate lever (4) and the lifting arm (6) divide the pivot axis (3) on the bearing arm (2).

7. Mowing machine as claimed in claim 1, **characterised in that** the lifting arm (6) and the intermediate lever (4) are bent in an L-shape in the same direction.

8. Mowing machine as claimed in claim 7, **characterised in that** the intermediate lever (4) is articulated on the pivot axis (3) at the end of one L-leg (4a), the second hydraulic cylinder (5) is articulated at the end of the other L-leg (4b), the first hydraulic cylinder (5) is articulated on the intermediate lever (4) between the L-bend and the articulation (9c) of the second hydraulic cylinder, and the second hydraulic cylinder (5) is articulated on the lifting arm (6) at the plunger rod end in the region of the L-bend of the lifting arm (6).

9. Mowing machine as claimed in at least one of the preceding claims, **characterised in that** the first and second hydraulic cylinders (5, 9) overlap with one another, at least in the working positions.

10. Mowing machine as claimed in claim 1, **characterised in that** one pivot system (Y1) is designed so that the mowing unit (8) is pivotable beyond an approximately vertical orientation into the transport position and the first hydraulic cylinder (5) can be pressured from both ends.

11. Mowing machine as claimed in at least one of the preceding claims, **characterised in that** a pressure-dependent shut-off valve and a pressure storage are provided in a pressure controller of the second hydraulic cylinder (9).

12. Mowing machine as claimed in claim 1, **characterised in that** the intermediate lever (4) is disposed with two second hydraulic cylinders (9) inside of the lifting arm (6).

13. Mowing machine as claimed in at least one of the preceding claims, **characterised in that** the intermediate lever (4) is of a double-walled (4c) design with an intermediate space for the piston rod (5b) and the articulation (5c) of the first hydraulic cylinder (5).

## Revendications

1. Moissonneuse (M) destinée à être montée sur un dispositif de levage de tracteur (1), comprenant une faucheuse (8) débordant sur le côté, qui est disposée de façon à pouvoir basculer sur un bras support (2) d'un cadre porteur (10) au moyen d'un bras de levage (6) autour d'un axe de pivotement (3) orienté à peu près dans le sens de marche, et un dispositif de pivotement hydromécanique pour le déplacement de la faucheuse entre des positions de travail à peu près horizontales, une position de fourrière légèrement soulevée et une position de transport au moins approximativement verticale, le dispositif de pivotement présentant au moins deux vérins hydrauliques (5, 9) placés entre le cadre porteur (10) et le bras de levage (6) pour leur effet, **caractérisée en ce qu'**un levier intermédiaire (4) pouvant pivoter sur le cadre support (10) ou le bras support (2), qui subdivise le dispositif de pivotement en deux systèmes de pivotement (Y1, Y2) séparés, est placé entre les deux vérins hydrauliques (5, 9).

2. Moissonneuse selon la revendication 1, **caractérisée en ce que** l'un des systèmes de pivotement (Y1) comprend le premier vérin hydraulique (5) prévu pour le déplacement dans la position de transport, le bras support (2) et le levier intermédiaire (4) et l'autre système de pivotement (Y2) comprend le au moins un second vérin hydraulique (5) prévu pour les réglages de travail et la position de fourrière, le bras de levage (6) et le levier intermédiaire (4).

3. Moissonneuse selon la revendication 1, **caractérisée en ce que** le premier vérin hydraulique (5) peut être sollicité au moins d'un côté dans le sens de traction à partir d'une position de butée attribuée aux positions de travail et de fourrière, et **en ce que** le second vérin hydraulique (5) peut être sollicité d'un côté dans des directions de pression et est réalisé de telle sorte qu'il autorise un angle de pivotement de l'autre système de pivotement (Y2) qui est nécessaire pour un ajustement du fond de la faucheuse (8) dans les positions de travail et pour la position de fourrière.

4. Moissonneuse selon la revendication 1, **caractérisée en ce que** deux seconds vérins hydrauliques (5) parallèles sont prévus.

5. Moissonneuse selon la revendication 1, **caractérisée en ce que** chaque second vérin hydraulique (5) est un cylindre à plongeur.

6. Moissonneuse selon la revendication 1, **caractérisée en ce que** le levier intermédiaire (4) et le bras de levage (6) se partagent l'axe de pivotement (3) sur le bras support (2).

7. Moissonneuse selon la revendication 1, **caractérisée en ce que** le bras de levage (6) et le levier intermédiaire (4) sont coudés dans le même sens en forme de L.

8. Moissonneuse selon la revendication 7, **caractérisée en ce que** le levier intermédiaire (4) est articulé par l'extrémité d'une branche en L (4a) sur l'axe de pivotement (3), **en ce que** le second vérin hydraulique (5) est articulé parr l'extrémité de l'autre branche en L (4b), **en ce que** le premier vérin hydraulique (5) est articulé sur le levier intermédiaire (4) entre la flexion du L et l'articulation (9c) du second vérin hydraulique et le second vérin hydraulique (5) est articulé côté tige du piston dans la zone de la flexion du L du bras de levage (6) sur le bras de levage (6).

9. Moissonneuse selon au moins l'une quelconque des revendications précédentes, **caractérisée en ce que** les premiers et les seconds vérins hydrauliques (5, 9) se chevauchent au moins dans les positions de travail.

10. Moissonneuse selon la revendication 1, **caractérisée en ce que** l'un des systèmes pivotants (Y1) est réalisé de telle sorte que la faucheuse (8) peut basculer au-delà d'une orientation approximativement verticale dans la position de transport et **en ce que** le premier vérin hydraulique (5) peut être sollicité sur les deux côtés.

11. Moissonneuse selon au moins l'une quelconque des revendications précédentes, **caractérisée en ce qu'**une vanne de fermeture dépendante de la pression et un accumulateur de pression sont prévus dans une commande de pression du second vérin hydraulique (9).

12. Moissonneuse selon la revendication 1, **caractérisée en ce que** le levier intermédiaire (4) est disposé avec deux seconds vérins hydrauliques (9) à l'intérieur du bras de levage (6).

13. Moissonneuse selon au moins l'une quelconque des revendications précédentes, **caractérisée en ce que** le levier intermédiaire (4) est réalisé avec une double paroi (4c) avec un espace intermédiaire pour la tige du piston (5b) et l'articulation (5c) du premier vérin hydraulique (5).
